# EUROPÄISCHE PATENTSCHRIFT

(11) **EP 3 036 185 B1**
(45) Veröffentlichungstag und Bekanntmachung des Hinweises auf die Patenterteilung: **09.05.2018**
(21) Anmeldenummer: 14789790.4
(22) Anmeldetag: 14.10.2014
(51) Int. Cl.: B66B 1/34

(54) **CODIERUNGSVORRICHTUNG SOWIE POSITIONSBESTIMMUNGSVORRICHTUNG UND -VERFAHREN**
CODING DEVICE AS WELL AS POSITION DETERMINATION DEVICE AND METHOD
DISPOSITIF DE CODAGE AINSI QUE DISPOSITIF ET PROCÉDÉ DE DETERMINATION DE LA POSTION

(30) Priorität: 14.10.2013 EP 13004910
(43) Veröffentlichungstag der Anmeldung: 29.06.2016
(73) Patentinhaber: Cedes AG, 7302 Landquart (CH)
(72) Erfinder: SCHATT, Michael, CH-8808 Pfäffikon (CH); GRAF, Marco, CH-9472 Grabs (CH)
(74) Vertreter: Otten, Roth, Dobler & Partner mbB Patentanwälte
(86) Internationale Anmeldenummer: PCT/EP2014/002766
(87) Internationale Veröffentlichungsnummer: WO 2015/055300

(56) Entgegenhaltungen:
- EP-A1- 0 722 903
- EP-A1- 2 540 651
- US-A- 4 433 756

## Beschreibung

Die Erfindung betrifft eine Codierungsvorrichtung zur Markierung von Positionen in einem Aufzugschacht und zur Positionsbestimmung der Position von Aufzugkabinen im Aufzugschacht, ein computerimplementiertes Verfahren zur Bestimmung der Position einer Aufzugskabine in einem Aufzugschacht anhand einer Codierungsvorrichtung sowie eine Positionsbestimmungsvorrichtung nach dem Oberbegriff des Anspruchs 14.

Aus dem Stand der Technik ist beispielsweise aus der EP 0 722 903 B1 ein Verfahren bekannt, bei dem eine Aufzugkabine im Aufzugschacht entlang einem Codeband verfahren wird, wobei die Aufzugkabine über einen Detektor verfügt und dann, wenn der Detektor auf ein Bildmuster stößt, das am Codeband angebracht ist, dieses mit einem Referenzmuster verglichen und aus dem erkannten Muster eine Information für die Steuerung abgeleitet wird.

Aufgabe der Erfindung ist es, ein Codeband, ein Positionsbestimmungsverfahren sowie eine Positionsbestimmungsvorrichtung bereitstellen zu können, die eine erhöhte Sicherheit beim Betrieb des Aufzugs ermöglichen.

Die Aufgabe wird, ausgehend von einer Codierungsvorrichtung, einem Positionsbestimmungsverfahren sowie einer Positionsbestimmungsvorrichtung der eingangs genannten Art durch die Merkmale der Ansprüche 1, 8 sowie die kennzeichnenden Merkmale des Anspruchs 13 gelöst.

Durch die in den Unteransprüchen genannten Maßnahmen sind vorteilhafte Ausführungen und Weiterbildungen der Erfindung möglich.

Die Erfindung stellt zum einen ein Codeband zur Verfügung, bei dem zwar diskrete Positionen markiert werden, diese jedoch in einer solchen Dichte angebracht sein können, dass die Aufzugkabine praktisch permanent ihre Position auslesen kann. Die Kontrolleinheit zur Kontrolle der Aufzugfahrt, das heißt deren Regelung und/oder Steuerung, kann also permanent mit der Information über die aktuellen Position der Fahrkabine versorgt werden, und es gibt praktisch keine Wegstrecken, auf denen die Fahrkabine "blind", das heißt ohne konkrete Positionsinformation verfahren wird und erst dann reagieren kann, wenn sie auf eine Markierung stößt, welche zum Beispiel das Abbremsen der Kabine veranlassen soll. Durch diese Maßnahme wird ein hohes Maß an Sicherheit beim Betrieb des Aufzugs ermöglicht. Zudem bietet die Erfindung einen zuverlässigen und sicheren Betrieb der Aufzugkabine, weil die Art der Codierungsvorrichtung und des computerimplementierten Verfahrens zur Positionsbestimmung Überprüfungsmöglichkeiten, Redundanzen und Plausibilitätsprüfungen ermöglicht, durch welche hohe Sicherheitsstandards erreicht werden können. Insbesondere wird es auch ermöglicht, Positionen dann noch auslesen zu können, wenn das Codeband zum Beispiel verschmutzt wird und aufgrund dessen nicht mehr alle dort enthaltenen Informationen ausgelesen werden können.

Ein weiterer Vorteil der Erfindung besteht darin, dass gerade im Zusammenhang mit der Verwendung einer Codierungsvorrichtung gemäß einem Ausführungsbeispiel der Erfindung mit Lagerungsvorrichtungen zudem die Möglichkeit besteht, den Prozess des Sich-Setzens eines neu gebauten Gebäudes bei der Auswertung und Positionsbestimmung der Aufzugkabine berücksichtigen zu können und sogar eine Korrektur der Positionsbestimmung durchführen zu können. Neu errichtete Gebäude besitzen meist die Eigenschaft, dass sie sich mit der Zeit "setzen", das heißt aufgrund der hohen Gewichtsbelastungen es im Laufe der Zeit zu Stauchungen im Gebäude kommen kann. Gerade bei hohen Gebäuden, die meist über einen Aufzug verfügen, kann dieser Effekt auftreten. Besonders problematisch ist an diesem bauphysikalischen Effekt, dass nicht alle Teile des Gebäudes gleichmäßig davon betroffen sind. Insbesondere ist in der Regel das Aufzuggerüst, in dem die Fahrkabine verfahrbar gelagert ist, nicht oder zumindest nur teilweise davon betroffen. In einem solchen Fall bedeutet das teilweise Stauchen der Gebäudewand, dass sich auch die Fahrkabinen gegenüber dem Gestell des Aufzugsschachts verschieben. Eine derartige Korrektur, welche durch die Erfindung ebenfalls ermöglicht wird, kann dieses Phänomen des Sich-Setzens eines Gebäudes ausgleichen. Hierdurch kann insbesondere die Sicherheit und Zuverlässigkeit beim Betrieb des Aufzugs erhöht werden.

Die erfindungsgemäße Codierungsvorrichtung dient zur Markierung von Positionen in einem Aufzugsschacht und zur Positionsbestimmung der Position von Aufzugkabinen im Aufzugschacht. Sie umfasst ein Codeband, welches beispielsweise im Aufzugsschacht an der Decke des Gebäudes aufgehängt und befestigt ist. Über eine Lagerungsvorrichtung ist das Codeband im Aufzugsschacht beweglich gelagert. Wenn sich das Gebäude beispielsweise setzt und zum Teil ineinander gestaucht wird, kann sich entsprechend das Codeband zusammen mit der Decke des Gebäudes nach unten bewegen und dennoch weiterhin frei hängen, weil es innerhalb der Lagerungsvorrichtungen beweglich gelagert ist und nicht festgehalten wird. Dementsprechend muss sich das frei hängende Codeband auch nicht beim Sich-Setzen des Gebäudes biegen oder stauchen. Die Markierungen auf dem Codeband sind entlang dessen Länge angebracht, beispielsweise äquidistant. Die Markierungen können als Barcode, besonders jedoch bevorzugt als 2D-Code (zweidimensionaler Code) ausgebildet sein. Ein derartiger 2D-Code erreicht optisch zum einen eine besonders vorteilhafte, vereinfachte Detektion, aber auch eine hohe Dichte an Codierungsmöglichkeiten.

Grundsätzlich kann ein Barcode in einer Zeile angeordnet werden, desgleichen kann aber auch entsprechend ein 2-D-Code (zweidimensionaler Code) vorgesehen sein. Ein 2-D-Code ist regelmäßig als Matrix ausgebildet, wobei die einzelnen Matrixelemente hell oder dunkel, das heißt die Werte 1 oder 0 bilden können. Eine oder mehrere Zeilen können eine diskrete Position als solche markieren. Besonders vorteilhaft ist an dieser Art der Markierungen, dass diese nicht nur einfach detektiert und ausgelesen werden können, sondern auch mittels eines Algorithmus dekodierbar sind und mathematisch verarbeitet werden können. Hierdurch wird ebenfalls der Vorteil erreicht, dass aufwendige Bildvergleiche mit Referenzmustern vermieden werden können, die zum einen fehleranfälliger sein können, zum anderen aber auch Rechner mit hoher graphischer Rechenleistung erfordern und zudem Speicher hoher Kapazität zur Abspeicherung der Referenzmuster notwendig machen. Gemäß der Erfindung kann der mathematische Algorithmus mit Hilfe eines Rechners gegebenenfalls sogar mittels eines einfachen Mikrocontrollers oder Mikroprozessors ausgewertet werden. Durch diesen Zeitvorteil wird auch ermöglicht, dass die Markierungen sehr rasch ausgewertet werden können, sodass auch bei hoher Markierungsdichte die Fahrkabine während ihrer Fahr im Aufzugschacht permanent über ihre Position informiert sein kann.

Das erfindungsgemäße computerimplementierte Verfahren umfasst folgende Verfahrensschritte: eine Bildaufbereitung, ein Analyseverfahren mit Positionsmusteranalyse, ein Extrapolationsverfahren sowie ein Vergleichsverfahren.

Die Bildaufbereitung sieht dabei folgende Schritte vor:
- Es wird ein Abschnitt eines Codebands und/oder der Lagerungsvorrichtung mit einer optischen Detektionsvorrichtung als Pixelbild aus Pixeln aufgenommen, der Zeitpunkt der Aufnahme wird gemessen und dem Pixelbild zugeordnet, wobei der aufgenommene Abschnitt so groß gewählt wird, dass er wenigstens eine Zeile mehr umfasst als der Positionsmarker.
- Das Pixelbild wird aufbereitet, insbesondere einem Erkennungsraster zugeordnet, wobei vorzugsweise Pixel des Pixelbildes anhand ihrer Farbe und/oder Lage zusammengefasst werden, um den Barcode und/oder 2-D-Code der Markierung auslesen zu können.

Das Analyseverfahren sieht in einem ersten Schritt eine Positionsmusteranalyse vor, bei der:
- anhand des Teils der Markierung zur Kennzeichnung des Positionsmarkers der Positionsmarker erkannt wird,
- anhand der Positionsmarker ein Positionscode im Erkennungsraster identifiziert wird, insbesondere als Barcode und/oder 2-D-Code,
- der Positionscode in einen Binärcode umgewandelt wird,
- der Binärcode mittels eines Algorithmus decodiert und in eine Positionsangabe und/oder in die Information, ob eine Lagerungsvorrichtung detektiert wurde, umgewandelt wird,
- die bestimmte Positionsangabe zusammen mit dem zuordenbaren Zeitpunkt der Aufnahme und/oder zusammen mit Angaben über die Bewegung der Aufzugkabine, wie z.B. Geschwindigkeit und/oder Beschleunigung, gespeichert wird, wobei das erste Teilverfahren in bestimmten, vorzugsweise gleichen Zeitabständen einer Fahrt der Aufzugkabine wiederholbar ist, um fortlaufend während der Fahrt Positionsinformationen gewinnen bzw. generieren zu können.

Die Bildaufbereitung und Positionsmusteranalyse bilden zusammen ein erstes Teilverfahren.

Ein Extrapolationsverfahren wird als zweites Teilverfahren durchgeführt, bei dem:
- überprüft wird, ob wenigstens zwei gespeicherte Positionsangaben und deren Zeitpunkt der Aufnahme gespeichert sind,
- aus den wenigstens zwei Positionsangaben, deren Zeitpunkten der Aufnahme und den Angaben über die Bewegung der Aufzugkabine eine extrapolierte Position der Aufzugkabine berechnet (E) wird.

Bei einem dritten Teilverfahren handelt es sich um ein Vergleichsverfahren, bei dem:
- aus der extrapolierten Positionsangabe anhand der Umkehrung des Algorithmus ein Barcode und/oder 2-D-Code und/oder ein Positionsmarker errechnet und mit dem aus dem ersten Teilverfahren bestimmten Positionsmarker verglichen wird,
- wobei insbesondere die extrapolierte Positionsangabe als Positionsangabe ausgegeben wird, wenn der extrapolierte Positionsmarker und der aufgenommene Positionsmarker sich höchstens um eine vorgegebene Anzahl an Balken der Barcodes und/oder Matrixelementen der 2-D-Codes unterscheiden.

Bei einer bevorzugten Ausführungsform der Erfindung wird das Vergleichsverfahren durch eine Beschleunigungskorrektur ergänzt, das heißt, es wird festgestellt, dass die extrapolierte Position fehlerbehaftet ist. Als mögliche Fehlerquelle wird zum Beispiel davon ausgegangen, dass die Geschwindigkeit der Aufzugkabine nicht völlig exakt bekannt war, die Messung der Zeit fehlerbehaftet ist oder sonstige statistische oder systematische Fehler auftreten können. Ein derartiger Fehler ist jedoch für die Position der Aufzugskabine in der Regel nicht relevant, wenn die Abweichung von der tatsächlichen Position nur geringfügig ist. Um die Beschleunigungskorrektur vorzunehmen, kann zunächst ein kleiner und dann, wenn der Positionsvergleich scheitern sollte, ein immer größer werdender Fehler angenommen werden. In der Folge können also zunehmend beabstandete Markierungszeilen berücksichtigt werden. Auf diese Weise kann das Verfahren gemäß diesem Ausführungsbeispiel der Erfindung in der Realität auftretende Fehler mit berücksichtigen, solange diese nicht so gravierend sind, dass sie den ordnungsgemäßen Betrieb des Aufzugs gefährden würden. Würden diese Fehler nicht mitberücksichtigt, könnte es vermehrt zu nicht bestimmbaren Positionen kommen, was den Betrieb erschweren oder die Auswertung komplizierter gestalten würde.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1: das Auslesen der Codierungsvorrichtung gem. der Erfindung durch einen optischen Detektor,
- Figur 2: eine schematische Darstellung einer Kameraaufnahme,
- Figur 3: ein Pixelstreifenpaar,
- Figur 4: ein erweitertes Bildmuster,
- Figur 5: ein Bildmuster,
- Figur 6: ein Positionsmuster,
- Figur 7: ein Gesamtschema des Computer-implementierten Verfahrens gem. der Erfindung,
- Figur 8: eine schematische Darstellung der Bildaufbereitung,
- Figur 9: eine schematische Darstellung des Analyseverfahren,
- Figur 10: eine schematische Darstellung des Vergleichsverfahrens, sowie
- Figur 11: eine schematische Darstellung des Korrelationsverfahrens.

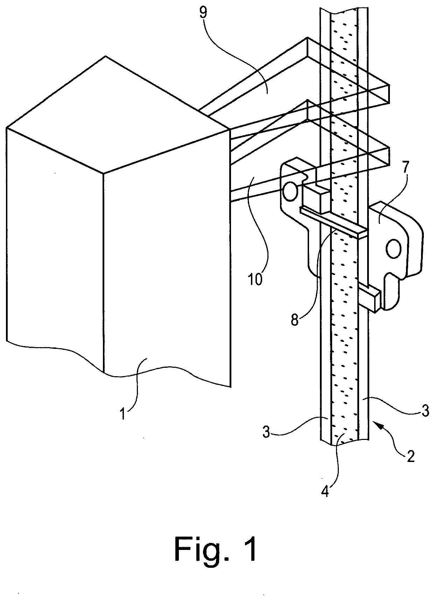

Figur 1 zeigt eine Detektionsvorrichtung 1, die ein Codeband 2 in einem Aufzugschacht ausliest. An den seitlichen Rändern des Codebands sind dazu Positionsstreifen 3 angebracht, die den 2-D-Code 4 seitlich begrenzen. Die Codierungsvorrichtung umfasst das Codeband 2 und eine Clip 7: Das Codeband 2 wird mit derartigen Clips 7 als Lagerungsvorrichtung beweglich gelagert, sodass es in Längsrichtung verschoben werden kann, wenn zum Beispiel das Gebäude sich mit der Zeit setzt. Der Clip 7 umfasst einen Steg 8, der den Code 4 bzw. die Positionsstreifen 3 übergreift. Die Detektionsvorrichtung 1 umfasst im Grunde zwei Kameras, deren Detektionsstrahlen 9, 10 zur Aufnahme eines Detektionsbildes ebenfalls in Figur 1 dargestellt sind.

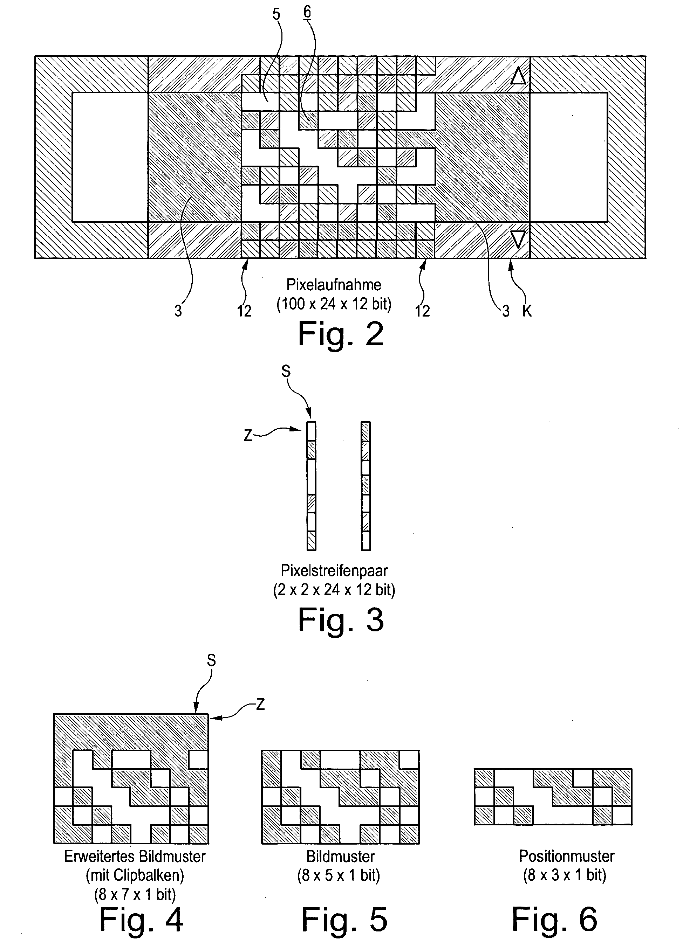

Figur 2 zeigt den aufgenommenen Bildausschnitt 1 der Kamera, der vom Codeband 2 aufgenommen wurde. Die Aufnahme 1 geht über den seitlichen Rand des Codebands 2 hinaus. An den äußeren Rändern des Codebands sind in Längsrichtung des Codebands 3 Positionsstreifen 3 angebracht. Diese sind vollständig schwarz ausgebildet und werden somit von der Detektionsvorrichtung und dem Auswerteverfahren einfach erkannt. Ebenso sorgen diese Positionsstreifen 3 für eine Rasterung, sodass beim Auswerteverfahren erkennbar ist, in welchem Bereich der 2D-Code 4 zu finden ist. Der 2D-Code setzt sich zusammen aus einer Matrix 4, die einzelne Matrixelemente 5, 6 aufweist. Das Matrixelement 5 ist ein helles, das Matrixelement 6 ein dunkles. Die Matrixelemente 5, 6 entsprechen jedoch im Allgemeinen nicht jeweils einem einzelnen Pixel der Kameraaufnahme. Daher ist es bei der Bildverarbeitung notwendig, aufgenommene Pixel gemäß ihrer Lage und ihrer Helligkeit einander zuzuordnen und zu einem Matrixelement zusammenzufassen. Im zusammengefassten Bild wiederum repräsentiert dann ein Pixel ein Matrixelement. In den Figuren 3 bis 6 werden durch Bildaufbereitung B aufbereitete Ausschnitte angegeben, bei denen Kamerapixel zu Matrixelementen aufbereitet wurden.

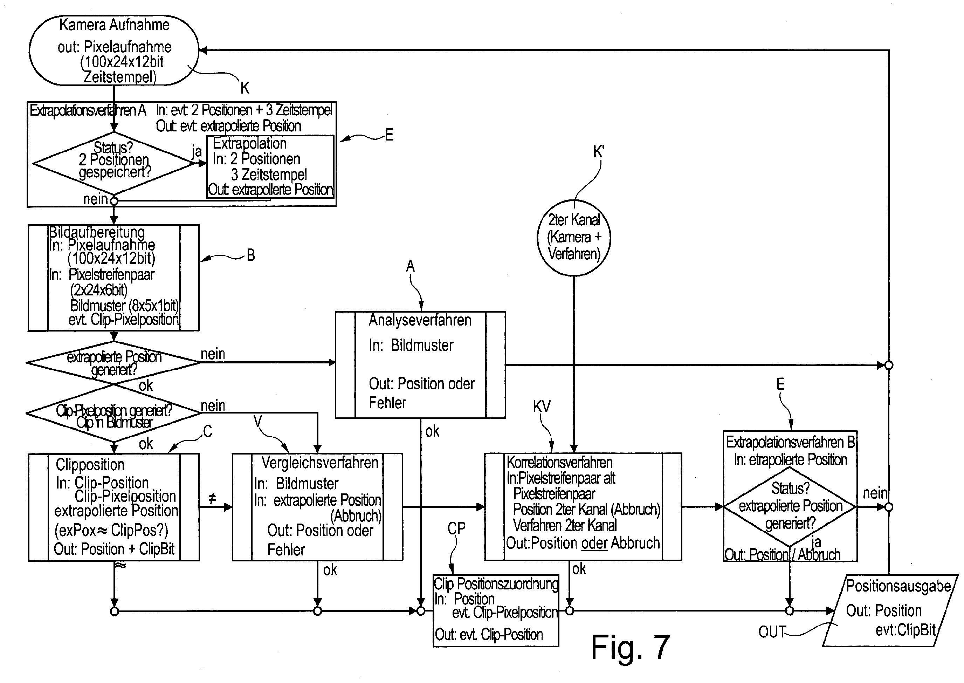

Eine Gesamtdarstellung eines Computer-implementierten Verfahrens zur Positionsbestimmung ist in Figur 7 dargestellt:

### Kameraaufnahme K

Die Detektionsvorrichtung 1 ermöglicht eine optische Detektion der am Codeband 2 angebrachten Markierungen 3, 4. Die Kamera (ggf. auch mehrere Kameras) arbeitet in der Regel im Infrarotbereich (IR-Licht, Wellenlänge ca. größer als 780 Nanometer bis 1 Millimeter), wodurch insbesondere auch störende Einflüsse vermieden werden können. Fährt die Kabine im Aufzugsschacht, in dem auch das Codeband 2 aufgehängt ist, so wird sie entlang des Codebands verfahren, wobei die Kamera so ausgerichtet ist, dass sie das Codeband entsprechend erfassen kann. Während der Fahrt macht die Kamera wiederholt immer wieder Aufnahmen K von Abschnitten des Codebands (insbesondere in gleichen Zeitabständen), vgl. Figur 2. Typischerweise kann eine derartige Pixelaufnahme 100 x 24 Pixel umfassen und als Graustufenbild (z.B. 12-Bit-Bild) aufgenommen werden. Gleichzeitig ist im vorliegenden Fall eine Uhr oder ein Timer vorgesehen, der je nach Kameraaufnahme einen Zeitstempel zuordnet, das heißt eine zeitliche Information, wann die Aufnahme erfolgt ist. Dieser Zeitstempel ermöglicht später eine Auswertung der Bilder, wenn weitere Informationen bekannt, das heißt zum Beispiel einzelne Positionen zu bestimmten Zeitpunkten, Geschwindigkeit der Aufzugkabine oder Beschleunigung der Aufzugkabine.

### Extrapolationsverfahren E

Ziel des Gesamtverfahrens aus Fig. 7 ist die Positionsbestimmung der Aufzugkabine, und zwar zu verschiedenen Zeitpunkten, wobei den einzelnen Positionen, wie bereits beschrieben, Zeitstempel mitgegeben werden können. In einem weiteren Verfahrensschritt wird nach der Kameraaufnahme K überprüft, ob in einem Speicher bereits zwei Positionen bestimmt wurden, zu denen auch zwei Zeitstempel vorliegen. Ist dies der Fall, kann zu einem weiteren, dritten Zeitpunkt die Position bestimmt werden (Extrapolation). Falls die Kabine keine gleichförmige Bewegung durchgeführt hat, kann die Extrapolation gegebenenfalls unter Berücksichtigung der aus der Kabinensteuerung bzw. -regelung bekannten Geschwindigkeit der Aufzugkabine bzw. Beschleunigung der Aufzugkabine erfolgen. Aus zwei Positionen und deren Zeitstempel, das heißt der zeitlichen Information, wann diese Positionen erreicht wurden, kann bei gleichförmiger Bewegung der Aufzugkabine deren Geschwindigkeit bestimmt werden. Ändert sich diese Geschwindigkeit nicht, so kann zu einem weiteren dritten Zeitpunkt entsprechend daraus die Position gewonnen werden. Beschleunigt die Aufzugkabine in dieser Zeit oder wird die Aufzugkabine in dieser Zeit abgebremst, so muss dies entsprechend berücksichtigt werden. Diese Angaben über die Beschleunigung und gegebenenfalls auch über die Geschwindigkeit können bei Ausführungsformen der Erfindung von der Kontrollvorrichtung der Fahrkabine (Steuerung oder Regelung) abgerufen bzw. ausgelesen werden. Sind nach Durchführung der Kameraaufnahme weniger als zwei Positionen gespeichert, wird zum nächsten Verfahrensschritt übergegangen, ohne dass eine Extrapolation stattfindet.

Die Voraussetzung, um das Extrapolationsverfahren E durchzuführen, ist es, dass wenigstens zwei Positionen und drei Zeitstempel gespeichert sind. Die beiden Positionen dienen dazu, eine Streckendifferenz zwischen den beiden Positionen bestimmen zu können. Sind zwei weitere Zeitstempel vorhanden, von denen jeweils einer einer der beiden Positionen zugeordnet ist, so kann auch die Zeitdifferenz, die nötig war, ausgehend von einer der beiden Positionen die andere zu erreichen, bestimmt werden. Der dritte Zeitstempel ist notwendig, um schließlich die weitere, zu extrapolierende Position bestimmen zu können. Vor der eigentlichen Durchführung des Extrapolationsverfahrens muss also geprüft werden, ob diese Voraussetzung erfüllt ist, dass insgesamt zwei Positionen gespeichert sind sowie drei Zeitstempel.

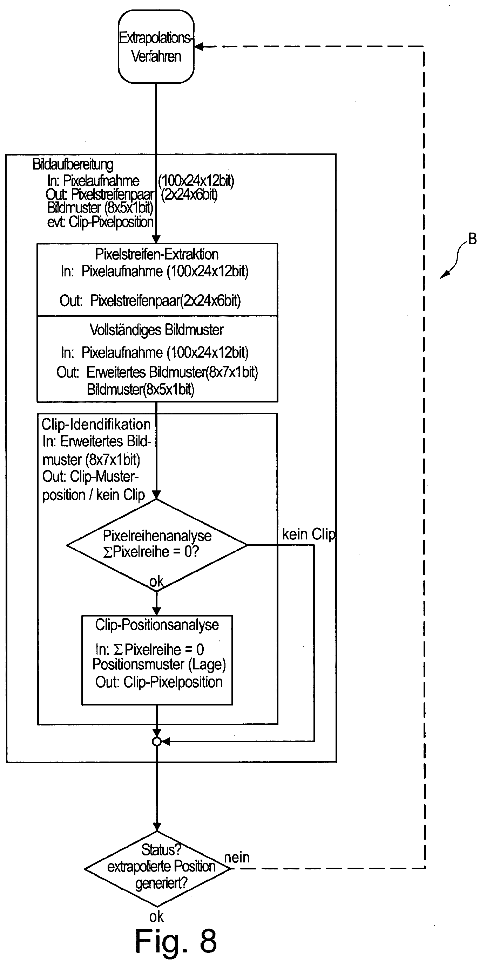

### Bildaufbereitung B (Fig. 8)

Der nächste Verfahrensschritt besteht aus einer Bildaufbereitung. Bei der Kameraaufnahme wurde ein Graustufenbild aufgenommen. Grundsätzlich ist es auch denkbar, sofort ein Schwarz-Weiß-Bild aufzunehmen, zumal der auf dem Codeband 2 aufgedruckte Code 4 als Barcode oder 2D-Code ausgebildet ist und somit grundsätzlich nur aus zwei Farben bzw. Helligkeiten besteht. Es muss allerdings berücksichtigt werden, dass durch Lichteinflüsse aus der Umgebung, Ablagerungen auf dem Codeband, geringe Unterschiede im Abstand oder in Detektionswinkel nicht immer exakt die gleichen Helligkeitswerte einer Oberfläche detektiert werden können. Schwarze Flächen erscheinen sodann gegebenenfalls mehr oder weniger grau. Um diesen Effekt Rechnung tragen zu können, ist es vorteilhaft, ein Grauwertebild aufzunehmen und anhand der Farbe, hier anhand eines Schwellwertes einer Graustufe bzw. Helligkeit zu entscheiden, ob die detektierte Fläche oder das detektierte Pixel in Bezug auf einen Barcode oder einen 2D-Code einem dunklen oder einem hellen Bereich zuzuordnen ist. Gegebenenfalls kann dieser Schwellwert auch variabel gesetzt werden, sodass eine Nachjustierung ebenfalls grundsätzlich ermöglicht wird. Zum einen können somit die aufgenommenen Bilder grundsätzlich in ein 1-Bit-Bild umgewandelt werden. Zudem ist zu beachten, dass bei der Bildaufbereitung auch eine Art Bilderkennung oder Zuordnung zu einem Raster erfolgt.

Auf diese Weise können (im vorliegenden Fall) zwei 2 x 24 Pixel umfassende Pixelstreifen, deren Längserstreckung entlang der Spalten S verläuft, separiert werden (vgl. Fig. 3).

Des Weiteren werden ein Bildmuster und ein erweitertes Bildmuster erzeugt (Fig. 4 und 5). Das erweiterte Bildmuster ist in Figur 4 dargestellt und besteht aus 8 x 7 Matrixelementen in Schwarz-Weiß, das heißt 1-Bit-Darstellung. Bei diesen generierten Mustern werden die Matrixelemente zusammengefasst und in ihrer Größe reduziert jeweils als ein Pixel dargestellt. Das erweiterte Bildmuster gemäß Figur 4 besitzt deshalb mehr Zeilen Z als das Bildmuster gemäß Figur 5, weil, wie später erläutert wird, der Steg 8 einer Lagerungsvorrichtung 7 bzw. eines Clips drei Zeilen umfassen kann. Zudem umfasst jeder Positionsmarker, der die vollständige Information über eine einzelne Position besitzt, im vorliegenden Ausführungsbeispiel drei Zeilen. Für einzelne Auswerteverfahren können gegebenenfalls zusätzliche Zeilen benötigt werden.

Das einfache Bildmuster ist in Figur 5 dargestellt und besitzt lediglich fünf Zeilen, ebenfalls dargestellt in Schwarzweiß, also Einbitdarstellung. Das gesamte 2D-Matrixmuster umfasst zehn Spalten. Die äußere rechte und die äußere linke Spalte 11 dienen dazu, Positionsmarker, also zusammenhängende Bereiche der Matrix, die eine separate Position vollständig codieren, abzutrennen, das heißt zu markieren, wo diese anfängt und aufhört. Dies ist notwendig, damit bei zufälligem Aufnehmen eines Bildes klar ist, wo die Position markiert ist und nicht Teile zweier verschiedener Positionsmarker zusammen ausgewertet werden, was eine falsche Positionsangabe liefern könnte. Bei dem vorliegenden Ausführungsbeispiel sind die Zeilen der Matrix ohne Abstand zueinander angeordnet, was eine höhere Dichte der Markierungen ermöglicht.

Figur 6 zeigt ein Positionsmuster mit lediglich drei Zeilen, also ein Positionsmarker mit der vollständigen Codierung einer bestimmten Position.

Das Codeband ist, wie bereits oben beschrieben, in Lagerungsvorrichtungen zur beweglichen Lagerung des Codebandes, die an der Wand des Aufzugsschachts befestigt sind, beweglich gelagert. Diese so genannten Clips 7 umgreifen das Codeband 2 zur Aufzugkabine hin (mit dem Steg 8), also zur der Seite, an der sich die Markierung des Codebands befindet. Grundsätzlich verdeckt somit der Clip das Codeband teilweise. An dieser Stelle wäre also grundsätzlich bei einer Kameraaufnahme die Position nicht "erfassbar" sein. Daher ist es vorteilhaft, den Clip als solches zu erkennen. Besonders vorteilhaft ist die erfindungsgemäße Codierungsvorrichtung dahingehend, dass der Clip jedoch nicht als Bild erkannt werden muss, sondern dass er überraschenderweise zusammen mit dem Codeband ausgewertet werden kann. Dazu besitzt der Steg 8 des Clips, der über das Codeband ragt und detektiert wird, ein Codierungsmuster, das dem des Codebands entspricht, also ein Barcode oder ein 2D-Code.

Besonders vorteilhaft ist es, den auf dem Clip abgebildeten Code möglichst einfach zu gestalten, insbesondere in einer Farbe der Barcode- bzw. 2D-Code-Codierung, also schwarz oder weiß bzw. hell oder dunkel. Zum einen wird dadurch die Herstellung des Clips vereinfacht. Zum anderen kann der Clip dadurch einfach erkannt werden, was insbesondere vorteilhaft ist, weil das bauphysikalische Phänomen des Sich-Setzens von Gebäuden es mit sich bringen kann, dass sich der Clip relativ zum Codeband bewegt, wenn sich das Gebäude mit der Zeit setzt. Der Clip ändert sodann beim Sich-Setzen des Gebäudes seine relative Position zum Codeband. Daher ist es vorteilhaft, nur eine der Markierungen, nämlich entweder das Codeband oder den Clip mit einer absoluten Positionsangabe zu versehen, damit entsprechend ein Vergleich durchgeführt werden kann. Der Clip kann somit durch eine mathematische Analyse bzw. Durchführung eines Algorithmus gefunden werden. Diese Clipidentifikation erfolgt in der Bildaufbereitung über das erweiterte Bildmuster. Es erfolgt eine Pixelreinanalyse, in dem die Quersumme über die detektierten Matrixelemente gebildet wird. Beim vorliegenden Fall ist der Clip schwarz ausgebildet, wird also geprüft, ob die Quersumme über die Matrixelemente null ergibt. Ist dies der Fall, kann es sich nur um einen Clip handeln, da die Codierung so gewählt ist, dass andere Reihen nicht die Quersumme 0 besitzen können.

Da auch bekannt ist, wie viele Zeilen der Clip in Anspruch nimmt, zum Beispiel drei Zeilen, kann auch dessen Position bestimmt werden. Ist zum Beispiel am oberen Bildrand nur eine Zeile komplett schwarz, so wird sich der Clip entsprechend im oberen Bereich der Kameraaufnahme befinden. Sind alle Zeilen des Clips erkennbar, so befindet er sich an entsprechender Stelle in der Kameraaufnahme K. Durch einen vollständig abgebildeten Positionsmarker kann somit eine unmittelbar benachbarte Position zugeordnet werden. Ist bei einer Ausführungsform nicht mehr genügend Platz, um einen kompletten Positionsmarker zu erkennen, so muss gegebenenfalls über Extrapolation auf die Position des Clips geschlossen werden oder dieser einen entsprechenden Position zugeordnet werden. Es muss bei Detektion eines Clips nicht immer seine exakte Position zugeordnet werden; es genügt, den Clips immer in gleicher Weise eine Position zuzuordnen, beispielsweise mit einem konstanten Versatz, da in der Regel nur relative Abstände zwischen den Clips festgestellt werden müssen, um zum Beispiel festzustellen, wie stark ein Gebäude sich gesetzt hat. Im vorliegenden Fall wird beispielsweise die Unterkante des Clips hinsichtlich ihrer Position bestimmt.

### Clip-Position C:

In einem weiteren Verfahrensschritt wird festgestellt, ob überhaupt bereits eine extrapolierte Position generiert wurde. Ist dies der Fall, wird des Weiteren entschieden, ob ein Clip identifiziert werden konnte und eine Clip-Pixelposition erhalten worden ist. Ist dies ebenfalls zu bejahen, erfolgt als nächstes Teilverfahren die Bestimmung C der Clipposition (Figur 7). Mit Hilfe der bisherigen Information über die Clipposition wird mit Hilfe des Extrapolationsverfahrens E eine Position des Clips extrapoliert. Stimmt diese extrapolierte Position zumindest ungefähr mit der Clipposition überein, wird als Position die extrapolierte Position ausgegeben sowie gegebenenfalls zusätzlich eine Information, ob ein Clip vorhanden war oder nicht. Diese Information kann als 1-Bit-Information (Clipbit) ausgebildet sein. Schließlich wird dem Clip seine entsprechende Position zugeordnet (Verfahrensschritt CP) und ausgegeben. Die Clipposition selbst kann ebenfalls gespeichert werden und später für eine Korrektur benutzt werden, wenn sich das Gebäude gesetzt hat.

Ist der Aufzug beispielsweise gerade erst angefahren und wurden aus diesem Grund noch keine zwei Positionen gespeichert, so wird zunächst das so genannte Analyseverfahren A durchgeführt.

Wenn aus dem detektierten Positionsmuster eine Position gewonnen werden kann und teilweise zumindest ein Clipbalken detektiert wird, muss die exakte Position des Clipbalkens extrapoliert werden. Die Position des Clipbalkens ist dann in der Regel leicht gegenüber der detektierten Position verschoben. Wenn der Clipbalken das Positionsmuster vollständig überdeckt, kann gegebenenfalls aus den in der Vergangenheit gespeicherten Positionen die neue Position extrapoliert werden. Wenn beispielsweise der Clipbalken das Positionsmuster vollständig ausfüllt, kann beim vorliegenden Ausführungsbeispiel aus dem Clipbalken allein nicht auf dessen Position geschlossen werden, sodass diese aus den zuvor gespeicherten Daten zu extrapolieren ist.

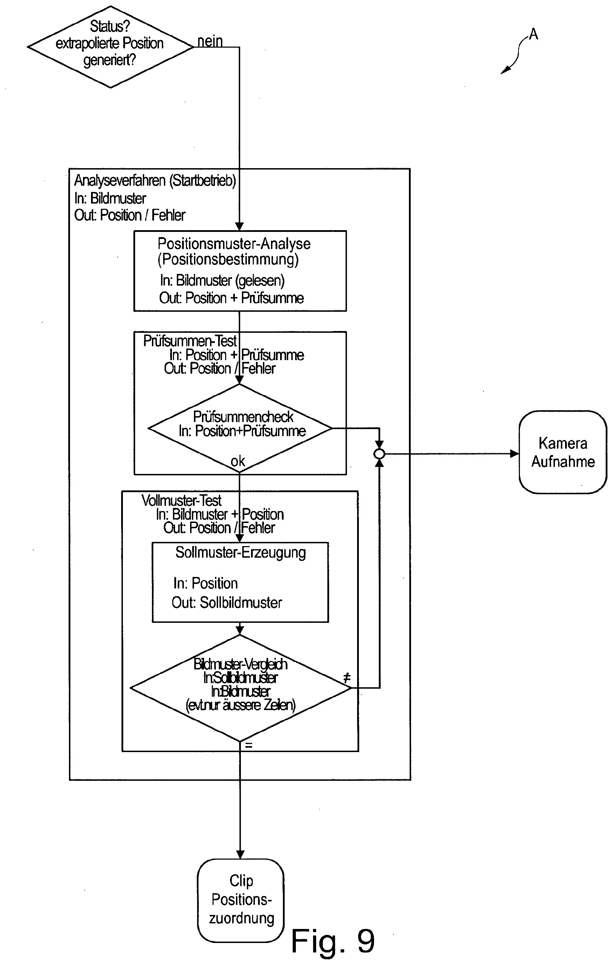

### Analyseverfahren A (Fig. 9)

Beim Analyseverfahren wird zunächst anhand des von der Kamera bestimmten Bildmusters ein Prüfsummentest vorgenommen, das heißt, es wird überprüft, ob die erfassten Matrixelemente eine spezielle Prüfsumme ergeben. Zudem wird anhand der Seitenränder 11 der Positionsmarker (Figur 6) bestimmt und mit Hilfe des vorgegebenen Algorithmus die Position des aufgenommenen Bildes bestimmt. Die errechnete Position dient im vorliegenden Fall dazu, anhand des Umkehrverfahrens des Algorithmus darauf zu schließen, welche weiteren Zeilen an den Positionsmarker angrenzen. Diese wurden ebenfalls mit von der Kamera aufgenommen. Sodann wird ein Vergleich vorgenommen, ob diese berechneten Muster auch mit dem der an die Positionsmarker angrenzenden Bereiche übereinstimmen. Diese Bereiche, die an den Positionsmarker angrenzen, müssen somit nicht extra zur Berechnung einer Position herangezogen werden. Je nachdem, wie viel von den oberen und unteren Randbereichen innerhalb der Kameraaufnahme K angezeigt wird, ist dies gegebenenfalls ohne Weiteres gar nicht möglich. Entsprechen diese generierten Codierungen den tatsächlich aufgenommenen Codierungen, so kann mit sehr hoher Wahrscheinlichkeit darauf geschlossen werden, dass die Positionsangabe tatsächlich zutrifft. Diese Position kann dann ausgegeben werden (Positionsausgabe OUT in Fig. 7), wobei gegebenenfalls auch eine zusätzliche Zuordnung der Clipposition erfolgen kann, wenn ein Clip detektiert wurde. Wurde eine extrapolierte Position generiert, aber kein Clip aufgenommen, so wird das Vergleichsverfahren durchgeführt.

Wie bereits erläutert, beinhaltet das Positionsmuster, welches gemäß Figur 6 drei Zeilen aufweist, die gesamte Positionsinformation. Das Analyseverfahren benutzt jedoch das Bildmuster, das zwei Zeilen mehr umfasst als das Positionsmuster. Aus dem Positionsmuster, auf das ein Umkehrverfahren des Algorithmus zur Positionsbestimmung angewendet werden kann, kann somit auf die beiden angrenzenden Zeilen geschlossen werden. Es wird also ein entsprechendes Soll-Bild-Muster erzeugt und mit dem tatsächlichen Bildmuster (vgl. Figur 5) verglichen. Bei einer Übereinstimmung handelt es sich bei der ermittelten Position mit hoher Wahrscheinlichkeit um die tatsächliche Position der Aufzugskabine. Wie in Figur 4 zu sehen, umfasst ein Clipbalken eine Breite von drei Zeilen, was der Größe nach einem Positionsmuster entspricht. Wenn der Clipbalken in einem Bildmuster erscheint, kann es also beispielsweise vorkommen, dass dieser abzüglich der oberen und unteren Zeile genau das herausgefilterte Positionsmuster bildet. Der Clip kann entsprechend als solcher detektiert werden, indem die Quersumme über die Grauwerte im Pixelbild gebildet und mit einem Grauwerte-Schwellenwert verglichen wird.

Beim Ausführungsbeispiel ist der Clipbalken schwarz. Da der Farbe Schwarz der Wert Null zugeordnet ist, ergibt dies im Idealfall die Quersumme null, weil lediglich schwarze Pixel detektiert wurden. In der Realität kann es jedoch vorkommen, dass statt einem idealen Schwarzwert ein dunkler Grauwert beispielsweise detektiert wird, sodass es in der Regel vorteilhaft ist, den Schwellwert nicht auf null, sondern auf einen bestimmten Schwellenwert in Abhängigkeit von den bei Detektion zu erwartenden Grauwerten abgestimmt wird. Ist der Clip nur teilweise im Positionsmuster, das aus dem Bildmuster, das aus dem Bildmuster gewonnen wird, enthalten, so ist dennoch aus den erkannten Zeilen und unter Berücksichtigung der Clip-Position ein Rückschluss auf die tatsächliche Position möglich. Bei dem vorliegenden Ausführungsbeispiel ist der Code so gewählt, dass jede Zeile tatsächlich völlig individuell ist und kein zweites Mal auf dem Codeband vorkommt. Wenn ein Clipbalken detektiert wird und nur ein Teil des Positionsmusters ausmacht, muss im vorliegenden Beispiel automatisch die oberste oder unterste Zeile des Bildmusters ebenfalls einen Teil des Clipbalkens bilden. Auch dies kann beim Vollmustertest des Analyseverfahrens berücksichtigt werden.

Das hohe Maß an Sicherheit ist gewährleistet, weil nicht nur die Detektion, die grundsätzlich fehlerbehaftet sein kann (sei es durch Verschmutzungen, zusätzliche Reflexion oder sonstige Fehldetektierungen) berücksichtigt wird, sondern weil auch anhand der Umkehrung des Algorithmus auf einen bislang noch nicht berücksichtigten Teil der Detektion zurückgegriffen und auf diesen rückgeschlossen wird.

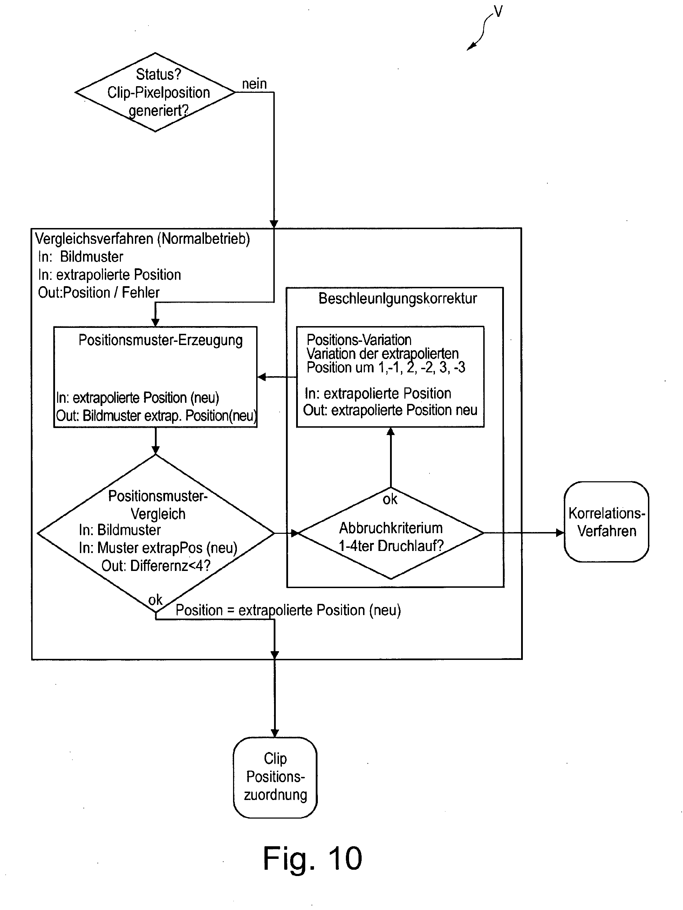

### Vergleichsverfahren V (Fig. 10)

Neben dem Bildmuster wird für das Vergleichsverfahren die extrapolierte Position benötigt (Fig. 7). Aus der extrapolierten Position allein wird das zu erwartende Bildmuster bestimmt und mit dem tatsächlich aufgenommenen verglichen. Stimmt der Vergleich exakt, so kann davon ausgegangen werden, dass tatsächlich die korrekte Position gefunden wurde, und die extrapolierte Position wird als Positionsangabe OUT ausgegeben. Es kann jedoch vorkommen, dass, obgleich die extrapolierte Position und die tatsächliche Position übereinstimmen, dennoch das aufgenommene Bild nicht richtig aufbereitet werden kann, weil zum Beispiel das Codeband an einzelnen Stellen verschmutzt ist oder weil andere störende Einflüsse eine Rolle gespielt haben. Ist der Code so gewählt, dass nicht von einer Zeile auf die nächste lediglich ein oder nur wenige Matrixelemente sich ändern, so kann eine geringe Abweichung bei wenigen Matrixelementen toleriert werden und dennoch davon ausgegangen werden, dass die extrapolierte Position tatsächlich vorliegt und der Aufgenommenen entspricht. Im vorliegenden Fall kann dies beispielsweise dann noch angenommen werden, wenn weniger als vier Matrixelemente abweichen. Dazu ist es besonders vorteilhaft, aus Sicherheitsgründen die Codierung so zu wählen, dass von einer Zeile Z auf die nächste diese stark abweichen kann. Beispielsweise kann der Algorithmus eine Verschlüsselung vorsehen, bei in Abhängigkeit von der Position der Zeile die Matrixelemente in vorgegebener Weise vertauscht werden, was einfach nachvollzogen werden kann, wenn der Algorithmus bekannt. Ist die Abweichung jedoch zu groß, so kann ein Verfahren mit einer Beschleunigungskorrektur durchgeführt werden. Insbesondere dann, wenn die Aufzugkabine während ihrer Fahrt beschleunigt bzw. abgebremst wird, treten hinsichtlich der Extrapolation Unsicherheiten auf, da diese Geschwindigkeitsänderungen im Zeitverlauf genau erfasst werden müssten und die Geschwindigkeit über Integration der Beschleunigung über die Zeit zu erfassen wäre. Dies kann in der Regel aus technischen Gründen nicht so genau vorgenommen werden, dass keine Abweichungen denkbar wären, zumal die Markierungen in einem Abstand von einem halben Millimeter beispielsweise angebracht sind.

Gegebenenfalls wird eine Beschleunigungskorrektur mit einer Art Positionsvariation durchgeführt, wozu zunächst ebenfalls die extrapolierte Positionsangabe benötigt wird. Auf der extrapolierten Positionsangabe, die berechnet worden ist, wird nun das Bildmuster erzeugt und die weiteren Zeilen, die unmittelbar an den Positionsmarker des erzeugten Bildmusters angrenzen. Das aufgenommene Muster wird somit mit Bildmustern verglichen, die ein, zwei oder drei Zeilen oberhalb des Bildmusters zu finden sind, da es der extrapolierten Positionsangabe entspricht. Existiert das aufgenommene Bildmuster in diesem Bereich, so kann davon ausgegangen werden, dass die Positionsbestimmung innerhalb einer tolerierbaren Grenze abgewichen ist und die extrapolierte Position ist die ausgegebene Position. Wenn auch dieser Vergleich zu keinem Ergebnis führt, wird ein Korrelationsverfahren durchgeführt. Dazu wird das aus Figur 3 bekannte Pixelstreifenpaar eingesetzt.

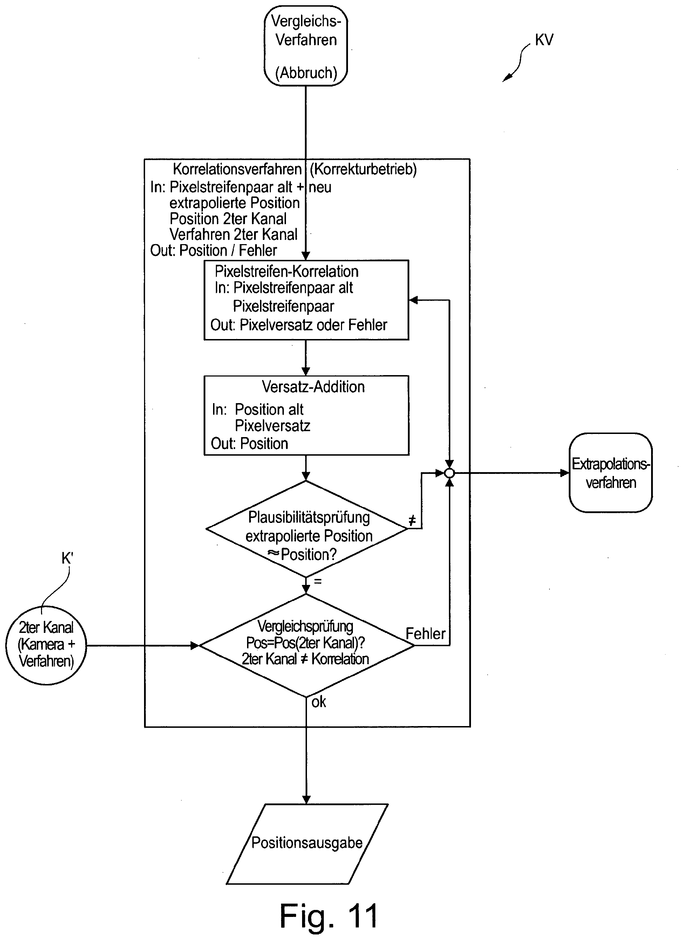

### Korrelationsverfahren KV (Fig. 11)

Benötigt wird zunächst das erzeugte Pixelstreifenpaar (siehe Fig. 3), und zwar jeweils ein aktuelles und ein zuvor während der Fahrt aufgenommenes Muster. Diese Pixelstreifen, die zu verschiedenen Zeiten aufgenommen wurden, werden gewissermaßen übereinander gelegt und verschoben, bis eine Übereinstimmung zustande kommt. Dabei wird entsprechend der Versatz bestimmt. Anhand der extrapolierten Position kann zusätzlich eine Plausibilitätsprüfung durchgeführt werden. Da die Detektionsvorrichtung insgesamt zwei Kameras umfasst, kann beim Korrelationsverfahren KV noch ein zweiter Vergleich mit einer zweiten Kamera (zweites Kamerabild K' in Figur 7) durchgeführt werden und auf Stimmigkeit hin untersucht werden. Wenn auch dieses Korrelationsverfahren KV zu keinem einheitlichen Ergebnis führt, kann ein weiteres Extrapolationsverfahren E noch einmal durchgeführt werden, das analog zum oben Beschriebenen verläuft. Wenn auch dies zu keinem Ergebnis führt, muss eine neue Kameraaufnahme durchgeführt werden, da keine Position bestimmt werden kann. Gegebenenfalls wird dann, wenn gar keine Position bestimmt werden kann, ein Notfall ausgegeben.

Grundsätzlich ist es auch denkbar, insbesondere das Analyseverfahren, das Vergleichsverfahren oder das Korrelationsverfahren in anderer Weise miteinander, z.B. in anderer Reihenfolge, zu kombinieren.

### Bezugszeichenliste:

- 1: Detektionsvorrichtung
- 2: Codeband
- 3: Positionsstreifen
- 4: 2D-Code
- 5: Matrixelement
- 6: Matrixelement
- 7: Clip
- 8: Steg
- 9: Detektionsausleuchtung
- 10: Detektionsausleuchtung
- 11: Markierungsspalten

- A: Analyseverfahren
- B: Bildaufbereitung
- C: Bestimmung der Clippositon
- CP: Clip-Positionszuordnung
- E: Extrapolationsverfahren
- K: Kameraaufnahme
- K': zweite Kameraaufnahme
- KV: Korrelationsverfahren
- V: Vergleichsverfahren
- OUT: Positionsausgabe

## Patentansprüche

1. Codierungsvorrichtung zur Markierung von Positionen in einem Aufzugschacht und zur Positionsbestimmung der Position von Aufzugkabinen im Aufzugschacht, welche ein Codeband (2) umfasst, wobei:
- das Codeband (2) wenigstens drei Markierungen aufweist, die entlang der Länge des Codebands angeordnet sind, um jeweils diskrete Positionen zu markieren,
- die Markierungen als Barcode und/oder 2-D-Code (4) ausgebildet sind,
- die Markierungen so angeordnet sind, dass sie Zeilen ausbilden und insbesondere wenigstens so viele Zeilen wie zu markierende diskrete Positionen vorhanden sind,
- die Markierungen so ausgebildet sind, dass sie für jede zu markierende diskrete Position einen Positionsmarker umfassen,
- die Markierungen mittels eines Algorithmus decodierbar sind, wobei insbesondere eine mathematische Funktion existiert, die jeder Markierung einer Position eindeutig die entsprechende Position zuordnet,
- wenigstens eine Lagerungsvorrichtung (7, 8) zur beweglichen, insbesondere längsbeweglichen Lagerung des Codebands (2) im Aufzugschacht vorgesehen ist, welche dazu ausgebildet ist, das Codeband wenigstens teilweise, vorzugsweise vollständig, zu umgreifen und welche derart ausgebildet ist, dass sie eine Markierung, insbesondere einen Barcode und/oder 2-D-Code trägt, der so angeordnet ist, dass er bei Umgreifen des Codebands (2) auslesbar mindestens einen Teil der Markierung des Codebands abdeckt.

2. Codierungsvorrichtung nach Anspruch 1, **dadurch gekennzeichnet, dass** die Markierungen so angeordnet sind, dass sie wenigstens zwei Spalten ausbilden.

3. Codierungsvorrichtung nach einem der vorgenannten Ansprüche, **dadurch gekennzeichnet, dass** die Positionsmarker so ausgebildet sind, dass eine diskrete Position in wenigstens zwei Zeilen codiert ist.

4. Codierungsvorrichtung nach einem der vorgenannten Ansprüche, **dadurch gekennzeichnet, dass** ein Teil der Markierung (11) zur Kennzeichnung der Positionsmarker ausgebildet ist.

5. Codierungsvorrichtung nach einem der vorgenannten Ansprüche, **dadurch gekennzeichnet, dass** die Markierungen ohne Abstand und/oder äquidistant auf dem Codeband (2) angebracht sind.

6. Codierungsvorrichtung nach einem der vorgenannten Ansprüche, **dadurch gekennzeichnet, dass** die Lagerungsvorrichtung einen Steg (8) umfasst, um das Codeband (2) an der Seite zu übergreifen, auf der die Markierungen angebracht sind und/oder die einer Detektionsvorrichtung (1) zuzuwenden sind.

7. Codierungsvorrichtung nach einem der vorgenannten Ansprüche, **dadurch gekennzeichnet, dass** die Markierungen der wenigstens einen Lagerungsvorrichtung auf dem Steg (8) angebracht und insbesondere ausschließlich einfarbig ausgebildet sind, vorzugsweise in genau einer der beiden Farben des Barcodes und/oder 2-D-Codes, vorzugsweise der dunkleren Codefarbe entspricht, besonders bevorzugt schwarz ist.

8. Computer-implementiertes Verfahren zur Bestimmung der Position einer Aufzugkabine in einem Aufzugschacht anhand einer Codierungsvorrichtung nach einem der vorgenannten Ansprüche, wobei folgende Schritte eines ersten Teilverfahrens durchgeführt werden, indem:
- ein Abschnitt eines Codebands (2) und/oder der Lagerungsvorrichtung (7, 8) mit einer optischen Detektionsvorrichtung als Pixelbild (K) aus Pixeln aufgenommen wird/werden und der Zeitpunkt der Aufnahme gemessen und dem Pixelbild zugeordnet wird, wobei der aufgenommene Abschnitt (K) so groß gewählt wird, dass er wenigstens eine Zeile mehr umfasst als der Positionsmarker,
- das Pixelbild aufbereitet wird, insbesondere einem Erkennungsraster zugeordnet wird, vorzugsweise Pixel des Pixelbildes anhand ihrer Farbe und/oder Lage zusammengefasst werden, um den Barcode und/oder 2-D-Code der Markierung auslesen zu können,
- anhand des Teils (11) der Markierung zur Kennzeichnung des Positionsmarkers der Positionsmarker erkannt wird,
- anhand der Positionsmarker ein Positionscode im Erkennungsraster identifiziert wird, insbesondere als Barcode und/oder 2-D-Code,
- der Positionscode (4) in einen Binärcode umgewandelt wird,
- der Binärcode mittels eines Algorithmus decodiert und in eine Positionsangabe und/oder in die Information, ob eine Lagerungsvorrichtung detektiert wurde, umgewandelt wird,
- die bestimmte Positionsangabe zusammen mit dem zuordenbaren Zeitpunkt der Aufnahme und/oder zusammen mit Angaben über die Bewegung der Aufzugkabine, wie z.B. Geschwindigkeit und/oder Beschleunigung, gespeichert wird, wobei das erste Teilverfahren in bestimmten, vorzugsweise gleichen Zeitabständen einer Fahrt der Aufzugkabine wiederholbar ist, und
wobei ein zweites Teilverfahren durchgeführt wird, bei dem:
- überprüft wird, ob wenigstens zwei gespeicherte Positionsangaben und deren Zeitpunkt der Aufnahme gespeichert sind,
- aus den wenigstens zwei Positionsangaben, deren Zeitpunkten der Aufnahme und den Angaben über die Bewegung der Aufzugkabine eine extrapolierte Position der Aufzugkabine berechnet (E) wird,
und wobei ein drittes Teilverfahren durchgeführt wird, bei dem:
- aus der extrapolierten Positionsangabe anhand der Umkehrung des Algorithmus ein Barcode und/oder 2-D-Code und/oder ein Positionsmarker errechnet und mit dem aus dem ersten Teilverfahren bestimmten Positionsmarker verglichen wird,
- wobei insbesondere die extrapolierte Positionsangabe als Positionsangabe ausgegeben wird, wenn der extrapolierte Positionsmarker und der aufgenommene Positionsmarker sich höchstens um eine vorgegebene Anzahl an Balken der Barcodes und/oder Matrixelementen der 2-D-Codes unterscheiden.

9. Computer-implementiertes Verfahren nach Anspruch 8, **dadurch gekennzeichnet, dass** eine Folge von wenigstens zwei zum extrapolierten Positionsmarker beabstandeten Positionsmarkern berechnet wird und ein Vergleich dieses berechneten Positionsmarkers mit dem detektierten Positionsmarker durchgeführt wird, wobei insbesondere diejenige Position als Positionsangabe ausgegeben wird, die derjenigen Position entspricht, für die der Vergleich eine Übereinstimmung ganz oder im Rahmen eines vorgegebenen Kriteriums ergibt.

10. Computer-implementiertes Verfahren nach einem der Ansprüche 8 bis 9, **dadurch gekennzeichnet, dass** eine Folge von wenigstens zwei zum extrapolierten Positionsmarker beabstandeten Positionsmarkern berechnet wird, wobei dazu in der Folge zunehmend beabstandete Positionsmarker verwendet werden.

11. Computer-implementiertes Verfahren nach einem der Ansprüche 8 bis 10, **dadurch gekennzeichnet, dass** die optische Detektion des Abschnitts als Graustufenaufnahme (K) erfolgt.

12. Computer-implementiertes Verfahren nach einem der Ansprüche 8 bis 11, **dadurch gekennzeichnet, dass** die Graustufenaufnahme anhand eines Graustufenschwellwertes in ein Schwarz-Weiß-Bild und/oder ein 1-Bit-Bild umgewandelt wird.

13. Computer-implementiertes Verfahren nach einem der Ansprüche 8 bis 12, **dadurch gekennzeichnet, dass** im Betrieb die optischen Detektionen (K) wiederholt in gleichen Zeitabständen durchgeführt werden.

14. Positionsbestimmungsvorrichtung zur Bestimmung der Position einer Aufzugkabine in einem Aufzugschacht, umfassend: eine Codierungsvorrichtung nach einem der Ansprüche 1 bis 7, eine Detektionsvorrichtung (1) zum optischen Auslesen der Markierungen des Codebands sowie einen Rechner zur Durchführung eines Computer-implementierten Verfahrens nach einem der Ansprüche 8 bis 13.

## Claims

1. A coding device for marking positions in an elevator shaft and for determining the position of elevator cars in the elevator shaft, which comprises a code strip (2), wherein:
- the code strip (2) has at least three markings, which are arranged along the length of the code strip, in order to mark in each case discrete positions,
- the markings are designed as a barcode and/or 2-D code (4),
- the markings are arranged such that they form lines and, in particular, at least as many lines are available as discrete positions to be marked,
- the markings are designed such that they comprise a position marker for each discrete position to be marked,
- the markings are decodable by means of an algorithm, wherein, in particular, a mathematical function exists, which clearly assigns the corresponding position to each marking of a position,
- at least one bearing device (7, 8) is provided for the movable, in particular, longitudinally movable bearing of the code strip (2) in the elevator shaft, which is designed to engage around the code strip at least partially, preferably completely and which is designed in such a manner that it bears a marking, in particular, a barcode and/or 2-D code, which is arranged such that during the engagement around the code strip (2) it covers at least a part of the marking of the code strip in a readable manner.

2. The coding device according to Claim 1, **characterized in that** the markings are arranged such that they form at least two columns.

3. The coding device according to any one of the preceding claims, **characterized in that** the position markers are designed such that a discrete position is coded in at least two lines.

4. The coding device according to any one of the preceding claims, **characterized in that** a part of the marking (11) is designed for identifying the position marker.

5. The coding device according to any one of the preceding claims, **characterized in that** the markings are applied with no spacing and/or equidistantly on the code strip (2).

6. The coding device according to any one of the preceding claims, **characterized in that** bearing device comprises a crosspiece (8), in order to engage over the code strip (2), on the side on which the markings are applied and/or which are to be allocated to a detection device (1).

7. The coding device according to any one of the preceding claims, **characterized in that** the markings of the at least one bearing device are applied to the crosspiece (8) and in particular are designed exclusively in a single colour, preferably in precisely one of the two colours of the barcode and/or 2-D code, preferably corresponds to the darker code colour, particularly preferably is black.

8. A computer-implemented process for determining the position of an elevator car in an elevator shaft by means of a coding device according to any one of the preceding claims, wherein the following steps of a first sub-process are implemented, in that:
- a section of a code strip (2) and/or of the bearing device (7, 8) is recorded with an optical detection device as a pixel image (K) composed of pixels and the time of the recording is measured and is assigned to the pixel image, wherein the recorded section (K) is selected to be so large that it comprises at least one line more than the position marker,
- the pixel image is processed, in particular, is assigned to a recognition grid, preferably pixels of the pixel image are combined by means of their colour and/or position, in order to be able to read out the barcode and/or 2-D code of the marking,
- the position marker is identified by means of the part (11) of the marking for identification of the position marker,
- by means of the position marker, a position code is identified in the recognition grid, in particular, as a barcode and/or 2-D code,
- the position code (4) is converted into a binary code,
- the binary code is decoded by means of an algorithm and is converted into a position indication and/or into the information as to whether a bearing device was detected,
- the specific position indication together with the assignable time of the recording and/or together with indications of the movement of the elevator car, such as, for example, speed and/or acceleration, are stored, wherein the first sub-process is repeatable at specific, preferably equal time intervals of the movement of the elevator car, and
wherein a second sub-process is carried out, in which:
- it is checked, whether at least two stored position indications and their time of recording are stored,
- from the at least two position indications, their times of recording and the indications of the movement of the elevator car, an extrapolated position of the elevator car is calculated (E),
and wherein a third sub-process is carried out, in which:
- from the extrapolated position indication, by means of the inversion of the algorithm, a barcode and/or 2-D code and/or a position marker is calculated and compared with the position marker determined from the first sub-process,
- wherein, in particular, the extrapolated position indication is outputted as position indication, if the extrapolated position marker and the recorded position marker differ at most by a predetermined number of bars of the barcodes and/or matrix elements of the 2-D codes.

9. The computer-implemented process according to claim 8, **characterized in that** a sequence of at least two position markers spaced apart from the extrapolated position marker is calculated and a comparison of this calculated position marker with the detected position marker is carried out, wherein, in particular, that position is outputted as position indication, which corresponds to that position for which the comparison yields an agreement entirely or within a predetermined criterion.

10. The computer-implemented process according to any one of Claims 8 to 9, **characterized in that** a sequence of at least two position markers spaced apart from the extrapolated position marker is calculated, wherein as a result increasingly spaced apart position markers are used.

11. The computer-implemented process according to any one of Claims 8 to 10, **characterized in that** the optical detection of the section occurs as a greyscale recording (K).

12. The computer-implemented process according to any one of Claims 8 to 11, **characterized in that** the greyscale recording is converted by means of a greyscale threshold value into a black-white image and/or a 1-bit image.

13. The computer-implemented process according to any one of Claims 8 to 12, **characterized in that**, during operation, the optical detections (K) are repeatedly carried out at equal time intervals.

14. A position determining device for determining the position of an elevator car in an elevator shaft, comprising: a coding device according to any one of Claims 1 to 7, a detection device (1) for optically reading out the markings of the code strip and a computer for carrying out a computer-implemented process as claimed in any one of Claims 8 to 13.

## Revendications

1. Dispositif de codage pour le marquage de positions dans une cage d'ascenseur et pour la détermination de position de la position de cabines d'ascenseur dans la cage d'ascenseur, qui comprend une bande de code (2), dans lequel :
- la bande de code (2) présente au moins trois marquages, qui sont disposés le long de la longueur de la bande de code, afin de marquer des positions respectivement distinctes,
- les marquages sont conçus comme des codes à barre et/ou des codes 2-D(4),
- les marquages sont disposés de manière à former des lignes et, en particulier, au moins autant de lignes qu'il existe de positions distinctes à marquer,
- les marquages sont conçus de manière à comprendre pour chaque position distincte à marquer, un marqueur de position,
- les marquages peuvent être décodés au moyen d'un algorithme, dans lequel, en particulier, une fonction mathématique existe, qui attribue chaque marquage d'une position de façon unique à la position correspondante,
- au moins un dispositif de support (7, 8) pour le support mobile, notamment mobile longitudinalement de la bande de code (2) dans la cage d'ascenseur, qui est conçu pour entourer au moins partiellement, de préférence totalement, la bande de code et qui est conçu de manière à porter un marquage, notamment un code à barres et/ou un code 2-D, qui est disposé de manière à recouvrir, lorsqu'il entoure la bande de code (2) de manière lisible, au moins une partie du marquage de la bande de code.

2. Dispositif de codage selon la revendication 1, **caractérisé en ce que** les marquages sont disposés de manière à former au moins deux colonnes.

3. Dispositif de codage selon une des revendications précédentes, **caractérisé en ce que** les marqueurs de position sont conçus de manière à ce qu'une position distincte soit codée dans au moins deux lignes.

4. Dispositif de codage selon une des revendications précédentes, **caractérisé en ce qu'**une partie du marquage (11) est formée pour la reconnaissance du marqueur de position.

5. Dispositif de codage selon une des revendications précédentes, **caractérisé en ce que** les marquages sont appliqués sans espacement et/ou de manière équidistante sur la bande de code (2).

6. Dispositif de codage selon une des revendications précédentes, **caractérisé en ce que** le dispositif de support comprend une traverse (8), afin de venir en prise sur la bande de code (2) au niveau du côté, sur lequel les marquages sont appliqués et/ou qui sont tournés vers un dispositif de détection (1).

7. Dispositif de codage selon une des revendications précédentes, **caractérisé en ce que** les marquages du au moins un dispositif de support sont appliqués sur la traverse (8) et en particulier conçus exclusivement d'une seule couleur, de préférence précisément une des deux couleurs du code à barres et/ou du code 2-D, correspondant de préférence à la couleur sombre du code, de manière particulièrement préférée le noir.

8. Procédé mis en oeuvre par ordinateur pour déterminer la position d'une cabine d'ascenseur dans une cage d'ascenseur à l'aide d'un dispositif de codage selon une des revendications précédentes, les étapes suivantes d'un premier procédé partiel étant réalisées, dans lesquelles :
- une section d'une bande de code (2) et/ou le dispositif de support (7, 8) sont capturés avec un dispositif de détection optique sous la forme d'une image pixelisée (K) constituée de pixels et l'heure de la capture est mesurée et attribuée à l'image pixelisée, dans lequel la section capturée (K) est choisie pour être assez importante afin de contenir au moins une ligne de plus que le marqueur de position,
- l'image pixelisée est traitée, en particulier une grille de reconnaissance lui est attribuée, de préférence les pixels de l'image pixelisée sont regroupés au moyen de leur couleur et/ou de leur situation, afin de pouvoir lire le code à barres et/ou le code 2-D du marquage,
- à l'aide de la partie (11) du marquage pour l'identification du marqueur de position, le marqueur de position est reconnu,
- à l'aide du marqueur de position, un code de position est identifié dans la grille de reconnaissance, notamment sous forme du code à barres et/ou du code 2-D,
- le code de position (4) est converti en un code binaire,
- le code binaire est décodé au moyen d'un algorithme et converti en une indication de position et/ou en les informations indiquant si un dispositif de support a été détecté,
- l'indication de position déterminée, conjointement avec l'heure pouvant être attribuée de la capture et/ou conjointement avec les indications sur le mouvement de la cabine d'ascenseur, comme par ex. la vitesse et/ou l'accélération, sont stockées, dans lequel le premier procédé partiel peut être répété à des intervalles de temps déterminés, de préférence identiques, d'un déplacement de la cabine d'ascenseur et
dans lequel un deuxième procédé partiel est réalisé, selon lequel :
- on vérifie si au moins deux indications de position mémorisées et leur heure de capture sont mémorisées,
- à partir des au moins deux indications de position, de leur heure de capture et des indications concernant le mouvement de la cabine d'ascenseur, une position extrapolée de la cabine d'ascenseur est calculée (E)
et dans lequel un troisième procédé partiel est réalisé, selon lequel :
- à partir de l'indication de position extrapolée à l'aide de l'inversion de l'algorithme, un code à barres et/ou un code 2-D et/ou un marqueur de position est calculé et comparé au marqueur de position déterminé par le premier procédé partiel,
- dans lequel, en particulier, l'indication de position extrapolée est émise en sortie sous forme d'indication de position lorsque le marqueur de position extrapolé et le marqueur de position capturé diffèrent au plus d'un nombre prédéfini de barres du code à barres et/ou d'éléments de matrice du code 2-D.

9. Procédé mis en oeuvre par ordinateur selon la revendication 8, **caractérisé en ce qu'**une série d'au moins deux marqueurs de position espacés du marqueur de position extrapolé est calculée et une comparaison de ce marqueur de position calculé avec le marqueur de position détecté est réalisée, dans lequel en particulier la position est émise en sortie en guise d'indication de position, qui correspond à la position pour laquelle la comparaison produit une concordance totale ou dans le cadre d'un critère prédéfini.

10. Procédé mis en oeuvre par ordinateur selon une des revendication 8 à 9, **caractérisé en ce qu'**une série d'au moins deux marqueurs de position espacés du marqueur de position extrapolé est calculée, dans lequel pour ce faire, des marqueurs de position avec un espacement croissant sont utilisés dans la série.

11. Procédé mis en oeuvre par ordinateur selon une des revendications 8 à 10, **caractérisé en ce que** la détection optique de la section est effectuée sous forme de capture en niveaux de gris (K).

12. Procédé mis en oeuvre par ordinateur selon une des revendications 8 à 11, **caractérisé en ce que** la capture en niveaux de gris est convertie, à l'aide d'une valeur seuil de niveaux de gris, en une image en noir et blanc et/ou une image à 1 bit.

13. Procédé mis en oeuvre par ordinateur selon une des revendications 8 à 12, **caractérisé en ce que**, en utilisation, les détections optiques (K) sont réalisées de manière répétée à des intervalles temporels identiques.

14. Dispositif de détermination de position pour déterminer la position d'une cabine d'ascenseur dans une cage d'ascenseur, comprenant : un dispositif de codage selon une des revendications 1 à 7, un dispositif de détection (1) pour la lecture optique des marquages de la bande de code, ainsi qu'un calculateur pour la réalisation d'un procédé mis en oeuvre par ordinateur selon une des revendications 8 à 13.
